# EUROPÄISCHE PATENTANMELDUNG

(11) **EP 2 333 454 A1**
(43) Veröffentlichungstag der Anmeldung: **15.06.2011**
(21) Anmeldenummer: 09405205.7
(22) Anmeldetag: 25.11.2009
(51) Int. Cl.: F24J 2/52

(54) **Vorrichtung für die Montage von Solarmodulen auf einem Dach**

(71) Anmelder: Reich + Nievergelt AG, 8002 Zürich (CH)
(72) Erfinder: Folta, Enrico, 06295 Eisleben OT Sittichenbach (DE)
(74) Vertreter: Clerc, Natalia

(57) **Zusammenfassung**

Es wird eine Vorrichtung für die Montage von Solarmodulen auf einem Dach angegeben, insbesondere eine Vorrichtung für eine Auf-Dach-Montage von Solarmodulen (800). Die Vorrichtung weist eine Profilschiene (100, 200) auf mit einer ersten Nut (101, 201), die eine erste Öffnung (115, 215) hat, und einer zweiten Nut (102, 202), die eine zweite Öffnung (116, 216) hat. Ein erster Nutstein (300) ist in die erste Öffnung (115, 215) der ersten Nut (101, 201) einsetzbar und dient zur Verbindung der Profilschiene (100, 200) mit einem am Dach angebrachten Befestigungselement (400, 450). Ein zweiter Nutstein (300) ist in die zweite Öffnung (116, 216) der zweiten Nut (102, 202) einsetzbar und dient zur Verbindung der Profilschiene (100, 200) mit einem Solarmodul (800). Dabei sind die erste und die zweite Nut sind annähernd auf gleicher Höhe nebeneinander angeordnet.

## Beschreibung

### TECHNISCHES GEBIET

Die vorliegende Erfindung betrifft eine Vorrichtung für die Montage von Solarmodulen auf einem Dach gemäss Oberbegriff des Patentanspruchs 1.

### STAND DER TECHNIK

Seit längerem ist die Montage von Solarzellen- bzw. Photovoltaiksystemen auf Hausdächern oder an Fassaden bekannt, um insbesondere der Sonne zugewandte Flächen von Häusern zur Energiegewinnung zu nutzen. Dabei wird die Energie des Sonnenlichts in einer an sich bekannten Art und Weise mittels Solarzellen in elektrische Energie umgewandelt. Die elektrische Energie kann dadurch umweltfreundlich, unabhängig vom öffentlichen Versorgungsnetz und kostengünstig hergestellt werden.

Die Montage der Solarzellen auf einem Dach oder an einer Fassade kann auf unterschiedlichste Art und Weise vorgenommen werden, wobei die Montageart abhängig von der Dachart bzw. der Fassade ist. Dabei kann es sich insbesondere um ein Flach- oder ein Schrägdach handeln. Im Falle eines Schrägdaches ist es beispielsweise möglich, die Solarzellen mittels einer entsprechenden Halterung über bzw. auf der Dachdeckung oder der Dachhaut, welche meist durch Ziegel gebildet ist, zu montieren. Eine solche Auf-Dach-Montage ist insbesondere deshalb vorteilhaft, weil die äusserste Dachhaut dadurch kaum beschädigt wird, und die Funktion und im Speziellen die Dichtigkeit des Daches weiterhin gegeben sind. Zur Befestigung der Solarmodule auf dem Dach werden dabei beispielsweise bügelförmige Halterungen verwendet, welche unterhalb der äussersten Dachhaut, die insbesondere aus Ziegeln bestehen kann, befestigt werden und nach oben hin vorstehen. Die Solarmodule werden über eine Montagevorrichtung an den nach oben vorstehenden Enden dieser Halterungen befestigt, wobei ein Solarzellenmodul im Wesentlichen aus dem Solarlaminat mit den Solarzellen und einem Rahmen besteht, in dem das Solarlaminat gehalten ist. Es können aber auch beispielsweise Schrauben verwendet werden, welche durch die äusserste Dachhaut, also normalerweise die Ziegel, hindurchgefiihrt und in ein darunter angeordnetes Dachelement, wie beispielsweise eine Dachsparre, eine Dachpfette oder eine Dachlatte, eingeschraubt werden.

Problematisch bei der Auf-Dach-Montage ist insbesondere, dass die über die äusserste Dachhaut nach oben ragenden Befestigungselemente normalerweise nicht an beliebigen Stellen auf dem Dach angeordnet werden können. Die Platzierung der Befestigungselemente ist stark abhängig von der jeweiligen Dachkonstruktion, welche sich von Haus zu Haus stark unterscheiden kann. Aus diesem Grund ist es ein wichtiges Erfordernis an eine Auf-Dach-Montagevorrichtung für Solarmodule, dass die Vorrichtung eine gewisse Flexibilität in Bezug auf deren Verbindung mit dem Hausdach erlaubt. Die Vorrichtung sollte ausserdem auf eine möglichst einfache Art und Weise auf dem Dach montiert werden können.

Die DE 10 2006 000 090 beschreibt eine Befestigungsvorrichtung, bei welcher ein Trägerprofil an einem bügelartigen, mit einer Dachunterkonstruktion verbundenen Dachhaken befestigt wird. Dazu wird ein unterer, abstehender Steg des Trägerprofils mittels eines klammerartigen Halteelementes am Dachhaken festgeklemmt. Um ein Einschieben dieses abstehenden Steges unterhalb das Halteelement zu erleichtern, ist ein Federelement vorgesehen, welches das Halteelement nach oben hin drückt. Die Solarmodule werden dann, zum Beispiel wie in DE 10 2005 000 130 oder DE 10 2008 000 293 beschrieben, am Trägerprofil montiert. Bei einem Verschieben des Trägerprofils während der Montage kann sich der abstehende Steg jedoch sehr schnell vom Halteelement entfernen, wenn dieses noch nicht in der einklemmenden Position ist. Da ein Trägerprofil jeweils an einer Mehrzahl von Dachhaken befestigt werden muss, gestaltet sich die Montage eines Trägerprofils dieser Befestigungsvorrichtung deshalb eher umständlich.

Eine andere Befestigungseinrichtung ist in DE 10 2007 018 212 beschrieben, wobei hier eine Profilschiene auf einer Schiene eines am Dach montierten Gestellaufbaus mittels Halteklammern befestigt wird. Die Befestigung der Solarmodule an der Profilschiene erfolgt mittels eines Haltebleches, das einen Hakenabschnitt aufweist, welcher von der Seite her in eine Nut der Profilschiene eingeschoben wird. Durch das Vorhandensein von zwei übereinander angeordneten Schienen weist diese Befestigungseinrichtung jedoch eine sehr grosse Höhe auf. Die Solarmodule sind dadurch stark beabstandet zur Dachoberfläche angeordnet, was ästhetisch nicht ansprechend aussieht.

Eine weitere Vorrichtung zum Anbringen von Solarmodulen auf einer Dachfläche ist in DE 20 2005 001 469 offenbart, wo eine Schiene mit einem nach unten offenen und einem nach oben offenen Kanal zur Verbindung mit den Solarmodulen bzw. mit dem Dach verwendet wird. Auch hier bewirkt die Schiene einen grossen Abstand zwischen Solarmodul und Dachoberfläche.

EP 1 721 107 offenbart ein Montagesystem mit einer Montageschiene, die eine obere und eine untere Nut aufweist, wobei die Öffnungen der beiden Nuten in senkrecht zueinander stehenden Richtungen weisen. In die beiden Nuten ist jeweils ein Gewindestein einsetzbar. Mittels einer in den Gewindestein einschraubbaren Schraube sind eines oder mehrere Solarmodule an der oberen Nut der Montageschiene befestigbar. Auf dieselbe Weise kann ein an einem Dach angebrachtes Befestigungselement mit der unteren Nut der Montageschiene verbunden werden. Nachteilig bei diesem System wirkt sich wiederum insbesondere die Höhe der Montageschiene aus, welche einen verhältnismässig grossen Abstand der installierten Solarmodule zur Dachoberfläche verursacht.

### DARSTELLUNG DER ERFINDUNG

Es ist eine Aufgabe der vorliegenden Erfindung, eine Vorrichtung für die Montage von Solarmodulen auf einem Dach anzugeben, welche einen möglichst geringen Abstand der montierten Solarmodule zu einer Dachoberfläche ermöglicht.

Diese Aufgabe wird durch eine Vorrichtung mit den Merkmalen des Anspruchs 1 gelöst. Weitere Ausführungsformen sind in den abhängigen Ansprüchen angegeben.

Die vorliegende Erfindung stellt also eine Vorrichtung für die Montage von Solarmodulen auf einem Dach zu Verfügung, insbesondere eine Vorrichtung für eine Auf-Dach-Montage von Solarmodulen, aufweisend:
eine Profilschiene mit einer ersten Nut, die eine erste Öffnung aufweist, und einer zweiten Nut, die eine zweite Öffnung aufweist;
ein erster Nutstein, welcher in die erste Öffnung der ersten Nut einsetzbar ist und welcher zur Verbindung der Profilschiene mit einem am Dach angebrachten Befestigungselement dient; und
ein zweiter Nutstein, welcher in die zweite Öffnung der zweiten Nut einsetzbar ist und welcher zur Verbindung der Profilschiene mit einem Solarmodul dient.

Dabei sind die erste Nut und die zweite Nut annähernd auf gleicher Höhe nebeneinander angeordnet.

Mit der ersten und der zweiten Öffnung sind jeweils Öffnungen gemeint, welche sich zumindest über einen gewissen Bereich entlang der Längenausdehnung der Profilschiene erstrecken. Die erste und die zweite Öffnung erstrecken sich dabei bevorzugt entlang der gesamten Längenausdehnung der ersten bzw. der zweiten Nut.

Dadurch, dass die erste und die zweite Nut annähernd auf gleicher Höhe nebeneinander angeordnet sind, weist die Profilschiene eine minimierte Höhe auf. Der Begriff Höhe bezieht sich hier auf diejenige Richtung im Raum, die, wenn die Vorrichtung in einer vorgesehenen Weise auf einem Dach montiert ist, senkrecht zur Dachoberfläche steht. Dabei sind Ortsangaben in Bezug auf die Vorrichtung derart definiert, dass mit "unten" ein Ort nahe bei der Dachoberfläche gemeint ist und, relativ dazu, mit "oben" ein von der Dachoberfläche entfernter Ort bezeichnet wird, wenn die Vorrichtung wie vorgesehen auf einem Dach montiert ist. Dadurch, dass die Profilschiene eine minimierte Höhe aufweist, sind die Solarmodule nahe an der Dachoberfläche montierbar. Vorteilhaft ist zudem auch eine Ausgestaltung der Vorrichtung, bei der auch der erste und der zweite Nutstein, wenn sie jeweils in die erste bzw. die zweite Nut eingesetzt sind, auf annähernd gleicher Höhe angeordnet sind.

Vorteilhaft weisen die erste Öffnung und die zweite Öffnung dabei in zwei um 90° versetzte Richtungen. Die Solarmodule können dadurch näher an der Dachoberfläche installiert werden.

Vorzugsweise weist die Profilschiene einen Querschnitt auf, der als Ganzes im Wesentlichen rechteckig ist. Die Profilschiene hat dadurch eine sehr kompakte Bauform, wodurch die Profilschiene nicht nur stabil ist, sondern auch ästhetisch ansprechend aussieht.

Um die Grösse der Profilschiene so klein wie möglich zu halten und eine einfache Bauform zu erreichen, weist die Profilschiene vorteilhaft einen Steg auf, welcher die erste Nut und die zweite Nut voneinander trennt. Bei einer derartigen Profilschiene sind der erste und der zweite Nutstein, wenn sie in die erste bzw. die zweite Nut eingesetzt sind, zwar durch diesen Steg voneinander getrennt, aber ansonsten vorteilhaft urnnittelbar benachbart zueinander angeordnet. Vorzugsweise verläuft dabei dieser Steg im Querschnitt einerseits senkrecht zur Richtung, in welche die erste Öffnung weist, und andererseits parallel zur Richtung, in welche die zweite Öffnung weist.

Die Vorrichtung ist insbesondere dann einfach und günstig in der Herstellung und der Montage, wenn der erste und der zweite Nutstein identisch ausgebildet sind. Insbesondere um das Einsetzen von identisch ausgebildeten Nutsteinen zu erlauben, sind auch die erste und die zweite Nut bevorzugt identisch ausgebildet, wobei sie jedoch unterschiedliche Ausrichtungen haben können.

Vorteilhaft ist der Querschnitt der Profilschiene im Wesentlichen durch vier, miteinander verbundene Abschnitte gegeben, wobei jeweils zwei aneinander angrenzende Abschnitte senkrecht aufeinander stehen. Damit ist gemeint, dass im Querschnitt die wesentliche Form der Profilschiene durch diese vier Abschnitte gegeben ist, wobei die erste und die zweite Nut mit ihren jeweiligen Öffnungen erkennbar sind. Die Profilschiene weist dadurch einen sehr einfachen Aufbau auf. Vorzugsweise sind diese vier Abschnitte jeweils geradlinig ausgebildet.

Um eine Verbindung der Vorrichtung mit einem Solarmodul oder einem Befestigungselement des Daches zu ermöglichen, können der erste und der zweite Nutstein jeweils eine Gewindebohrung aufweisen.

Vorzugsweise weisen die erste Nut und die zweite Nut im Querschnitt jeweils drei parallele Stege auf. Bei einer solchen Ausgestaltung können die Nuten derart ausgebildet werden, dass der entsprechende Nutstein jeweils einfach in die Nut einsetzbar und in dieser gehalten ist. Vorteilhaft ist dabei der mittlere der drei parallel zueinander verlaufenden Stege im Vergleich zu den beiden äusseren Stegen kürzer ausgebildet. Bevorzugt ist ausserdem insbesondere eine Ausführungsform, bei der diese drei Stege durch ein geradlinig verlaufendes Element der Profilschiene miteinander verbunden sind. Bei diesem Element kann es sich insbesondere um einen Steg oder einen Abschnitt der im Querschnitt betrachteten Profilschiene handeln.

Innerhalb der ersten Nut und innerhalb der zweiten Nut sind bevorzugt jeweils zumindest zwei Kröpfungen vorhanden, welche bei der Verbindung der Profilschiene mit dem Solarmodul bzw. mit dem Befestigungselement vom jeweiligen Nutstein hintergriffen werden, um den Nutstein fest in der Nut zu halten. Die Kröpfungen erlauben vorteilhaft einen Formschluss der ersten und der zweiten Nut mit dem jeweils entsprechenden Nutstein. Der Nutstein kann eine oder mehrere eigene Kröpfungen und/oder eine oder mehrere Ausnehmungen aufweisen, welche jeweils in Bezug auf die Kröpfungen der Nuten komplementär ausgebildet sind.

Damit der Nutstein auf einfache Weise in eine Nut einsetzbar und aus dieser wieder entfernbar ist, sind die Kröpfungen einer Nut jeweils bevorzugt in dieselbe Richtung gerichtet.

Der erste Nutstein und der zweite Nutstein können in einer vorteilhaften Ausführungsform jeweils einen L-förmigen Querschnitt aufweisen.

Um die Montage der Vorrichtung zu erleichtern, weisen der erste und der zweite Nutstein im Querschnitt jeweils eine Form auf, welche eine Drehbewegung des Nutsteins um eine senkrecht zur Querschnittsfläche stehende Achse innerhalb der ersten bzw. der zweiten Nut aufgrund der Breite der Nut begrenzt. Der Nutstein kann sich dadurch bei der Montage nach dem Einsetzen in die Nut nicht ungewollt aus seiner vorgesehenen Position herausdrehen.

Die Montage der Vorrichtung am Hausdach und die Montage der Solarmodule an der Vorrichtung gestalten sich besonders dann sehr flexibel, wenn sich die erste und die zweite Nut jeweils annähernd über die gesamte Länge der Profilschiene erstrecken, und der erste Nutstein und der zweite Nutstein entlang dieser Länge jeweils an einer beliebigen Stelle der Profilschiene in die entsprechende erste oder zweite Nut einsetzbar sind.

Vorteilhaft weist die Vorrichtung ausserdem zumindest eine Profilschiene auf, die einen Anschlag hat, um ein Abrutschen eines auf der Profilschiene aufliegendes Solarmodul zu verhindern.

### KURZE BESCHREIBUNG DER ZEICHNUNGEN

Bevorzugte Ausfiihrungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Schnittansicht durch eine Profilschiene einer erfindungsgemässen Vorrichtung gemäss einer bevorzugten Ausführungsform;
- Fig. 2: eine Schnittansicht durch eine mit einem Anschlag versehene Profilschiene der Vorrichtung gemäss einer bevorzugten Ausfiihrungsform;
- Fig. 3: eine Schnittansicht durch zwei Profilschienen der Vorrichtung gemäss einer bevorzugten Ausfiihrungsform, wobei die Profilschienen an einem mittleren, an einer Stockschraube angebrachten Befestigungselement befestigt sind;
- Fig. 4: eine Schnittansicht durch einen an einem teilweise sichtbaren, mittleren Befestigungselement befestigten Nutstein der Vorrichtung gemäss einer bevorzugten Ausfiihrungsform;
- Fig. 5: eine Schnittansicht durch eine Profilschiene der Vorrichtung gemäss einer bevorzugten Ausführungsform, wobei die Profilschiene an einem seitlichen, an einer Stockschraube angebrachten Befestigungselement befestigt ist;
- Fig. 6: eine Schnittansicht durch zwei Profilschienen der Vorrichtung gemäss einer bevorzugten Ausführungsform, wobei die Profilschienen an einem mittleren, an einer Stockschraube angebrachten Befestigungselement befestigt sind, mit an den Profilschienen montierten Solarmodulen;
- Fig. 7: eine Schnittansicht durch eine Profilschiene der Vorrichtung gemäss einer bevorzugten Ausführungsform, wobei die Profilschiene an einem seitlichen, an einer Stockschraube angebrachten Befestigungselement befestigt ist, mit an der Profilschiene montiertem Solarmodul;
- Fig. 8: eine Schnittansicht durch ein mit einem Nutstein verbundenen, mittleren Niederhalteelement der Vorrichtung gemäss einer bevorzugten Ausführungsform;
- Fig. 9: eine Schnittansicht durch ein mit einem Nutstein verbundenen, seitlichen Niederhalteelement der Vorrichtung gemäss einer bevorzugten Ausfiihrungsform;
- Fig. 10: eine Frontansicht der Vorrichtung gemäss einer bevorzugten Ausführungsform mit montierten Solarmodulen; sowie
- Fig. 11: eine Seitenansicht der Vorrichtung gemäss einer bevorzugten Ausführungsform mit montierten Solarmodulen.

### BESCHREIBUNG BEVORZUGTER AUSFÜHRUNGSFORMEN

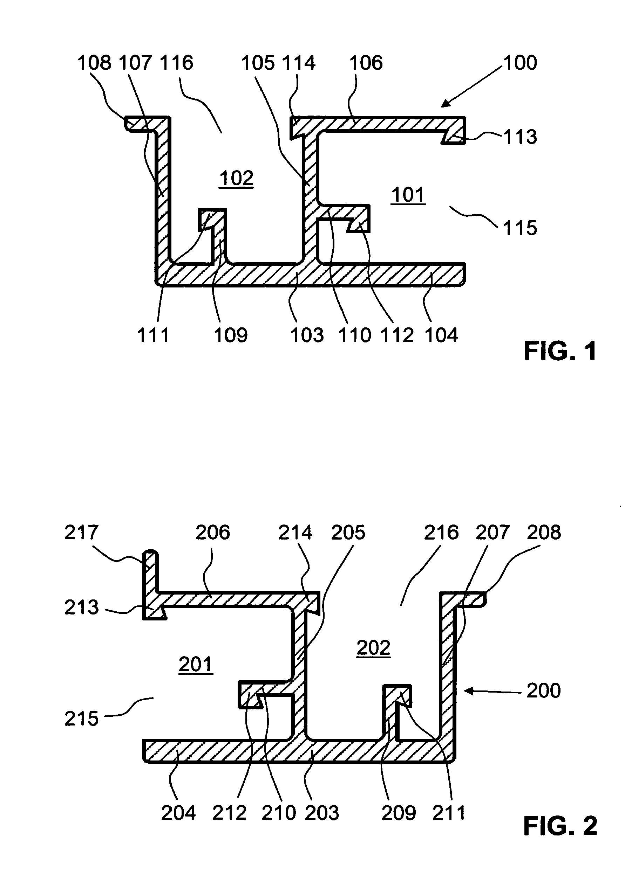

Die Figuren 1 bis 11 zeigen eine bevorzugte Ausführungsform einer erfindungsgemässen Vorrichtung für die Montage von Solarmodulen auf einem Dach. Die Vorrichtung dient insbesondere zur Auf-Dach-Montage von Solarmodulen, womit eine Montage über die bestehende Dachhaut, also zum Beispiel die Dachziegel, gemeint ist. Beim Dach kann es sich insbesondere um ein Schräg- oder Giebeldach, aber auch um ein Flachdach handeln.

Eine Profilschiene 100 gemäss einer bevorzugten Ausführungsform ist insbesondere in Figur 1 im Querschnitt gezeigt. Dabei hat der Querschnitt der Profilschiene 100 hier als Ganzes im Wesentlichen eine rechteckige Form. Die Profilschiene 100 ist vorteilhaft einstückig ausgebildet und wird vorzugsweise aus einem leichten und stabilen Material, wie zum Beispiel Aluminium, hergestellt. Die in Figur 1 gezeigte Querschnittsfläche ist hier über die gesamte Länge der Profilschiene 100 unveränderlich bezüglich Form und Fläche. Die Gesamtlänge der Profilschiene 100 entspricht vorzugsweise zumindest der Breite eines Solarmoduls 800. Bei einer Montage auf einem Giebeldach entspricht diese Breite bevorzugt der seitlichen Längenausdehnung in paralleler Richtung zum Giebel des auf dem Dach installierten Solarmoduls 800. Die Länge der Profilschiene 100 kann aber auch bedeutend grösser als die Breite eines Solarmoduls 800 sein, insbesondere kann sie ungefähr einem Vielfachen der Breite eines Solarmoduls 800 entsprechen, um die Montage von mehreren Solarmodulen 800 nebeneinander zu erlauben. Ein Solarmodul 800 besteht dabei im Wesentlichen aus einem Solarlaminat mit Solarzellen und einem Rahmen, in dem das Solarlaminat gehalten ist.

Die Profilschiene 100 weist eine erste Nut 101 auf, welche zur Befestigung der Profilschiene 100 an einem am Dach angebrachten Befestigungselement dient. Die Nut 101 hat eine erste Öffnung 115, welche, wenn die Profilschiene 100 auf einem Hausdach installiert ist, in eine seitliche, das heisst einer zur Dachoberfläche parallelen Richtung weist. Bei der Montage auf einem Giebel- oder Schrägdach weist die erste Öffnung 115 dabei insbesondere in Richtung entlang der Dachneigung zum Giebel bzw. zu einem oberen Bereich des Daches hin. Die Profilschiene 100 erstreckt sich dabei bevorzugt in Längsrichtung auf einer konstanten Höhe des Daches und parallel zum Giebel, falls ein solcher vorhanden ist.

Eine zweite Nut 102 der Profilschiene 100 weist eine zweite Öffnung 116 auf, welche vorteilhaft in eine um 90° gegenüber der ersten Nut 115 versetzte Richtung weist. Bei einer auf einem Hausdach installierten Profilschiene 100 weist die zweite Öffnung 116 dabei in senkrechter Richtung von der Dachoberfläche weg nach oben hin. Die beiden Nuten 101 und 102 sind an den beiden Stirnflächen der Profilschiene 100, welche sich in Längsrichtung der Profilschiene 100 an deren beiden Enden befinden, offen. Sie können in einer anderen Ausführungsform aber auch geschlossen sein. Die beiden Nuten 101 und 102 sind identisch ausgebildet, wobei sie in unterschiedliche Richtungen weisen, und haben jeweils einen Innenraum, der im Querschnitt im Wesentlichen quadratisch ist.

Die beiden Nuten 101 und 102 sind annähernd auf der gleichen Höhe nebeneinander angeordnet. Im Falle, wenn die Profilschiene 100 in einer vorgesehenen Weise auf einem Hausdach montiert ist, weisen die erste Nut 101 und die zweite Nut 102 also ungefähr denselben Abstand zur Dachoberfläche auf. Die Profilschiene 100 hat dadurch eine Höhe, welche im Wesentlichen der Breite der ersten Nut 101 bzw. der Höhe der zweiten Nut 102 entspricht. Dank dieser minimierten Höhe der Profilschiene 100 ist es möglich, die Solarmodule 800 sehr nahe zur Dachoberfläche zu montieren, was einen erheblichen ästhetischen Vorteil bringt.

Im Querschnitt weist die Profilschiene 100 einen sich geradlinig erstreckenden, verstärkt ausgebildeten Hauptabschnitt 103 auf. Von diesem Hauptabschnitt 103 erstrecken sich, jeweils in senkrechter Richtung dazu, die Stege 105, 107 und 109 parallel zueinander nach oben hin. Der Steg 107 ist dabei an einem Ende des Hauptabschnittes 103 angebracht, der Steg 105 ungefähr in der Mitte des Hauptabschnittes 103 und der Steg 109 zwischen den beiden Stegen 107 und 109. Der Steg 109 befindet sich dabei etwas näher beim Steg 107 als beim Steg 105. Konkret ist der Abstand zwischen dem Steg 109 und dem Steg 105 ungefähr doppelt so gross wie der Abstand zwischen dem Steg 109 und dem Steg 107. Während sich die Stege 105 und 107 gleich weit vom Hauptabschnitt 103 nach oben hin erstrecken und ungefähr halb so lang sind wie der Hauptabschnitt 103, ist der Steg 109 deutlich kürzer ausgebildet und etwas weniger lang als die Hälfte der Länge der Stege 105 und 107.

Vom oberen Ende des Steges 105 erstreckt sich, senkrecht zum Steg 105 und parallel zum Hauptabschnitt 103, ein Steg 106 in eine von der zweiten Nut 102 abgewandte Richtung. Die Länge des Steges 106 entspricht der Länge der Stege 105 und 107. Der Steg 106 weist insbesondere eine nach oben weisende, ebene Auflagefläche auf, welche zur Auflage eines Niederhalteelementes 600, 700 und/oder eines Solarmoduls 800 dient. Der vom Steg 107 abgewandte Endbereich des Hauptabschnitts 103 bildet einen Steg 104, der ebenso lang wie der Steg 106 ist. Zwischen den beiden Stegen 104 und 106 und parallel zu diesen ist am Steg 105 der Steg 110 angebracht. Dieser Steg 110 entspricht bezüglich seiner Länge dem Steg 109 und ist näher beim Steg 104 als beim Steg 106 angebracht, wobei der Abstand zwischen dem Steg 110 und dem Steg 104 ungefähr halb so gross ist wie der Abstand zwischen dem Steg 110 und dem Steg 106.

Der Innenraum der ersten Nut 101 ist im Wesentlichen durch die Stege 104, 105 und 106 begrenzt. Ebenso ist der Innenraum der zweiten Nut 102 im Wesentlichen durch die Stege 105 und 107 sowie einer Hälfte des Hauptabschnittes 103 begrenzt. Der Steg 105 trennt also die erste Nut 101 und die zweite Nut 102 voneinander. Der Steg 105 verläuft dabei senkrecht zur Richtung, in welche die erste Öffnung 115 weist, und verläuft zudem parallel zur Richtung, in welche die zweite Öffnung 116 weist. Die Stege 105, 106 und 107 stellen ebenso wie der Hauptabschnitt 103 Abschnitte des Querschnitts der Profilschiene 100 dar. Der Querschnitt der Profilschiene 100 ist also im Wesentlichen durch vier Abschnitte gegeben, die jeweils in senkrechter Richtung miteinander verbunden sind.

An dem vom Hauptabschnitt 103 weg weisenden Ende des Steges 109 ist eine Kröpfung 111 ausgebildet, welche zum Steg 107 hin gerichtet ist. Die Kröpfung 111 weist eine nach unten, zum Hauptabschnitt 103 hin weisende Unterseite auf, welche bezüglich des Hauptabschnitts 103 geneigt ist und sich in Richtung vom Steg 109 weg zum Steg 107 hin dem Hauptabschnitt 103 annähert. Der Steg 109 bildet also zusammen mit der Kröpfung 111 eine Art Haken, der in die zweite Nut 102 hineinragt. Eine zur Kröpfung 111 identisch ausgebildete Kröpfung 112 ist an dem Ende des Steges 110 ausgebildet, welches vom Steg 105 abgewandt ist. Die Kröpfung 112 weist dabei in Richtung des Steges 104. Der Steg 110 bildet zusammen mit der Kröpfung 112 ebenfalls eine Art Haken, welcher hier in die erste Nut 101 hineinragt.

Am oberen, dem Hauptabschnitt 103 abgewandten Ende des Steges 105 ist eine Kröpfung 114 ausgebildet, welche zum Steg 107 hingewandt ist. Die Kröpfung 114 weist ebenso wie die Kröpfung 111 eine Unterseite auf, die bezüglich des Hauptabschnitts 103 schräg verläuft und sich in Richtung vom Steg 105 weg zum Steg 107 hin dem Hauptabschnitt 103 annähert. Eine weitere Kröpfung 113, die identisch wie die Kröpfung 114 ausgebildet ist, ist an dem vom Steg 105 abgewandten Ende des Steges 106 vorhanden. Die Kröpfung 113 weist dabei zum Steg 104 hin und somit in dieselbe Richtung wie die Kröpfung 112.

An dem vom Hauptabschnitt 103 abgewandten Ende des Steges 107 ist eine Auflagelippe 108 vorhanden, welche sich im Querschnitt vom Steg 107 in dazu senkrechter Richtung erstreckt. Dabei weist die Auflagelippe 108 von der zweiten Nut 102 weg. Die Auflagelippe 108 weist insbesondere eine nach oben hin weisende, ebene Auflagefläche auf, welche zur Auflage eines Niederhalteelementes 600, 700 und/oder eines Solarmoduls 800 dient. Die Auflagefläche der Auflagelippe 108 befindet sich dazu vorteilhaft auf derselben Höhe wie die Auflagefläche des Steges 106.

Im vorliegenden Ausführungsbeispiel weist die Profilschiene 100 eine Gesamthöhe, welche im Querschnitt entlang der Längenausdehnung des Steges 107 gemessen wird, von nur ungefähr 4 cm auf.

Die in Figur 2 im Querschnitt dargestellte Profilschiene 200 mit Anschlag ist in dieser Ausführungsform identisch wie die Profilschiene 100 ausgebildet mit Ausnahme, dass die Profilschiene 200 zusätzlich ein Anschlagelement 217 aufweist. Elemente der Profilschiene 200, welche mit dazu entsprechenden Elementen der Profilschiene 100 identisch sind, weisen jeweils dieselben beiden Endziffern in den Bezugszeichen auf, wobei Elemente der Profilschiene 100 eine 1 als erste Ziffer des Bezugszeichens haben und Elemente der Profilschiene 200 mit Anschlag eine 2 als erste Ziffer des Bezugszeichens.

Das Anschlagelement 217 der Profilschiene 200 ist an dem von der zweiten Nut 202 wegweisenden Ende des Steges 206 angebracht und erstreckt sich vom Steg 206 in senkrechter Richtung auf der von der ersten Nut 201 abgewandten Seite nach oben hin. Die Profilschiene 200 wird im Gegensatz zur Profilschiene 100 derart auf einem Hausdach montiert, dass die erste Öffnung 215 der ersten Nut 201 im Falle eines Schräg- oder Giebeldaches in Richtung entlang der Dachneigung zu einem unteren Bereich des Daches hin weist. In Längsrichtung erstreckt sich die Profilschiene 200 dabei vorteilhaft auf einer konstanten Höhe des Daches bzw. in einer parallel zum Giebel verlaufenden Richtung, falls ein solcher vorhanden ist. Während die Profilschiene 100 bei dieser Ausführungsform zur Befestigung eines oberen Randes eines Solarmoduls dient, wird die Profilschiene 200 zur Befestigung eines unteren Randes eines Solarmoduls verwendet. Das Solarmodul wird dabei durch das Anschlagelement 217 vor einem Abrutschen in Richtung der Dachneigung bewahrt, indem es am Anschlagelement 217 mit seinem unteren Rand anschlägt.

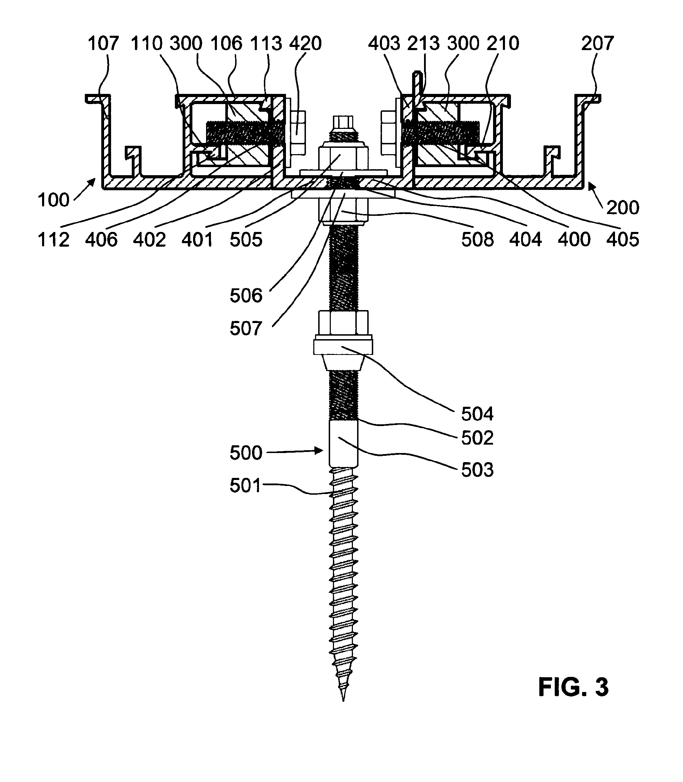

Figur 3 zeigt eine Profilschiene 100 und eine Profilschiene 200, welche jeweils über ein mittleres Befestigungselement 400 an einer Stockschraube 500 befestigt sind. Die Stockschraube 500 weist an ihrem unteren Endbereich ein Befestigungsgewinde 501 auf, welches eine Verbindung der Stockschraube 500 mit einem Element eines Daches, vorzugsweise einer Dachsparre oder einer Dachpfette, erlaubt. Das Gewinde 501 ist bei dieser Ausführungsform insbesondere für eine Verbindung mit einem aus Holz gefertigten Dachelement ausgelegt. Der obere Bereich der Stockschraube 500 weist oberhalb von einem Übergangsbereich 503 ein Montagegewinde 502 auf, das im Vergleich zum Befestigungsgewinde 501 engere Windungen hat, welche in ihrem Drehsinn entgegengesetzt oder, was bevorzugt ist, analog zum Gewinde 501 orientiert sein können. Die Stockschraube 500 hat eine Gesamtlänge, welche es erlaubt, dass die mit ihrem Befestigungsgewinde 501 in ein Element eines Daches eingeschraubte Schraube 500 mit ihrem Montagegewinde 502 durch die oberste Schicht der Dachhaut, also beispielsweise die Ziegel, hindurchragt. Um weiterhin die Dichtigkeit dieser obersten Schicht der Dachhaut gewährleisten zu können, weist die Stockschraube 500 dieser Ausführungsform ein Dichtelement 504 auf, welches von oben her entlang dem Gewinde 502 nach unten schraubbar ist bis es beispielsweise auf einer Oberseite eines Dachziegels aufliegt. Eine Öffnung in der Dachhaut, durch welche die Stockschraube 500 hindurchragt, ist dadurch abgedichtet.

Im Bereich des oberen Endes des Befestigungsgewindes 502 ragt die Stockschraube 500 durch eine Durchführöffnung 404 des mittleren Befestigungselementes 400 hindurch. Das mittlere Befestigungselement 400 ist zwischen einer oberen Befestigungsmutter 505 und einer unteren Befestigungsmutter 508, welche jeweils auf das Befestigungsgewinde 502 aufgeschraubt sind, eingeklemmt und dadurch an der Stockschraube 500 fixiert. Dabei kommt zwischen der oberen Befestigungsmutter 505 und dem Befestigungselement 400 eine obere Unterlegscheibe 506 und zwischen der unteren Befestigungsmutter 508 und dem Befestigungselement 400 eine untere Unterlegscheibe 507 zum Einsatz. Vorteilhaft werden das Befestigungselement 400 und das Dichtelement 504 bereits vor der Montage der Solarmodule 800 auf dem Dach an der Stockschraube 500 vorinstalliert.

Das Befestigungselement 400 ist im Querschnitt, wie in Figur 3 ersichtlich, U-förmig, wobei sich von einem geraden Hauptabschnitt 401 aus an beiden Enden jeweils ein gerader, seitlicher Abschnitt 402 bzw. 403 senkrecht nach oben hin erstreckt. Die seitlichen Abschnitte 402 und 403 sind dabei im Querschnitt gleich lang und etwas kürzer als der Hauptabschnitt 401 ausgebildet. In der Draufsicht weist das Befestigungselement 400 in dieser Ausführungsform ungefähr eine quadratische Form auf, wobei die Durchführöffnung 404 zentral angeordnet ist. Die seitlichen Abschnitte 402 und 403 weisen jeweils zentrale Öffnungen 405 bzw. 406 auf, durch welche eine Schraube 420 hindurchführbar ist, um eine Profilschiene 100 oder 200 am Befestigungselement 400 zu befestigen.

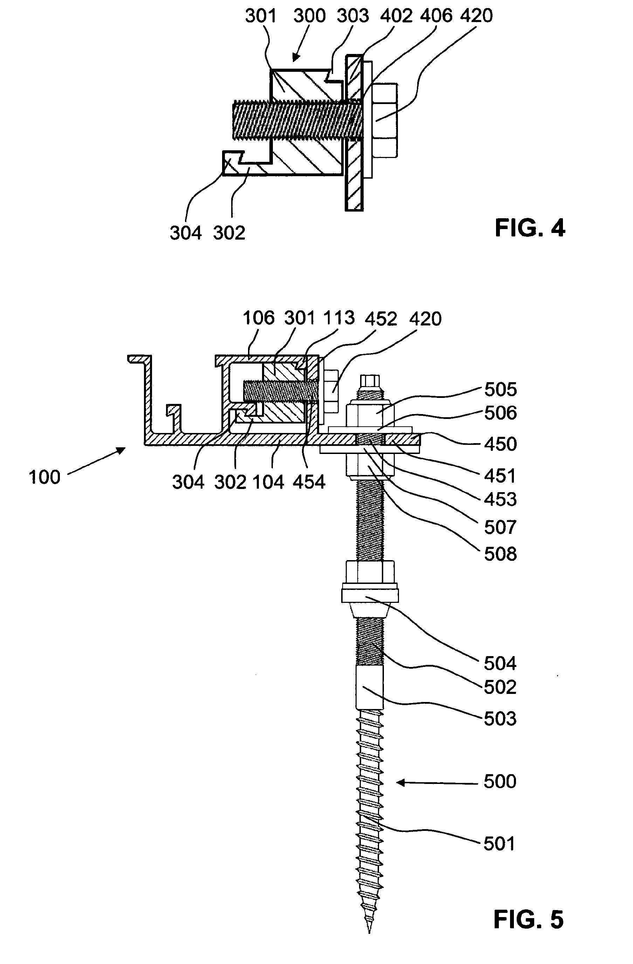

Zur Befestigung der Profilschienen 100, 200 am mittleren Befestigungselement 400 dienen Nutsteine 300, welche dazu in die Nut 101 bzw. 201 eingesetzt werden. Ein an einem seitlichen Abschnitt 402 des Befestigungselements 400 angebrachter Nutstein 300 ist in Figur 4 im Detail gezeigt. Der Nutstein 300 hat eine Querschnittsfläche, welche sich bei dieser Ausführungsform entlang der gesamten Länge des Nutsteins 300 bezüglich Form und Fläche nicht verändert. Der Nutstein 300 weist im Querschnitt einen im Wesentlichen rechteckigen Hauptabschnitt 301 auf, der den längeren Schenkel eines insgesamt L-förmigen Querschnitts des Nutsteins 300 bildet. Der kürzere Schenkel dieses L-förmigen Querschnitts wird durch einen Hintergreifsteg 302 gebildet, an dessen Ende eine zum Hauptabschnitt 301 hin weisende Nase 304 angebracht ist. Der Hintergreifsteg 302 hat eine Länge, welche ungefähr derjenigen einer kürzeren Seite des rechteckigen Hauptabschnitts 301 entspricht. Die Nase 304 weist eine leicht abgeschrägte Fläche auf, welche zum Hauptabschnitt 301 hin weist und sich in die vom Hintergreifsteg 302 wegweisende Richtung dem Hauptabschnitt 301 annähert. Zusammen mit der Nase 304 bildet der Hintergreifsteg 301 eine Art Haken, der komplementär zu den aus den Elementen 109 und 111, 110 und 112, 210 und 212 sowie 209 und 211 gebildeten Strukturen ausgebildet ist und in diese eingreifen kann.

In derjenigen Ecke des Hauptabschnitts 301, welche dem Hintergreifsteg 301 diagonal gegenüberliegt, ist eine Ausnehmung 303 vorhanden, welche komplementär zu den Kröpfungen 113, 213, 114 und 214 der Profilschienen 100 bzw. 200 ausgebildet ist, so dass diese in die Ausnehmung 303 eingreifen können.

Der Nutstein 300 weist in dieser Ausführungsform senkrecht zu seiner Querschnittsfläche eine Länge auf, die in etwa der Länge einer Längsseite seines im Querschnitt betrachteten, rechteckigen Hauptabschnitts 301 entspricht. Parallel zur Querschnittsfläche und zur Längenausdehnung des im Querschnitt betrachteten Hintergreifsteges 302 weist der Nutstein 300 eine zentrale, durchgehende Gewindebohrung auf, in welche eine Schraube 420 einschraubbar ist. Die Schraube 420 ist bezüglich ihrer Länge derart dimensioniert, dass das dem Schraubenkopf gegenüberliegende Ende, wenn die Schraube vollständig in den Nutstein 300 eingeschraubt ist und dabei, wie in Fig. 4 gezeigt, durch eine Öffnung 405 oder 406 des Befestigungselements 400 hindurchragt, nicht ganz soweit wie der Hintergreifsteg 302 vom Hauptabschnitt 301 wegragt.

Der Nutstein 300 ist vorteilhaft einstückig aus einem Metall, wie z.B. Aluminium, hergestellt. Bezüglich seiner Dimensionen ist der Nutstein 300 derart ausgebildet, dass er in jede der in diesem Ausführungsbeispiel identisch ausgebildeten Nuten 101, 102, 201, und 202 einsetzbar ist. Dabei sind die Form und die Dimension des Nutsteins 300 aber so gewählt, dass eine Drehbewegung des Nutsteins 300 innerhalb der Nuten 101, 102, 201 und 202 um eine senkrecht zur Querschnittsfläche stehende Achse aufgrund der Breite der Nut begrenzt ist. Die Breite der Nut bestimmt sich beispielsweise bei der Nut 101 aus dem Abstand der Stege 104 und 106. Alternativ wäre es aber auch denkbar, dass die Nuten 101, 102, 201, und 202 jeweils unterschiedlich ausgebildet sind, und dass verschieden geformte Nutsteine in Abhängigkeit von der Form der Nut zum Einsatz kommen. Der Nutstein 300 ist insbesondere entlang der gesamten Länge der Nut 101, 102, 201 und 202 an einer beliebigen Stelle der Profilschiene 100, 200 in die Nut einsetzbar.

Beim Verbinden der Profilschiene 100 oder der Profilschiene 200 mit dem Befestigungselement 400 wird der Nutstein 300, wie in Fig. 3 gezeigt, derart in die Öffnung 115 oder 215 der Nut 101 bzw. 201 eingeführt, dass der Hintergreifsteg 302 des Nutsteins 300 in den Raum zwischen dem Steg 110 und dem Steg 104 bzw. in den Raum zwischen dem Steg 210 und dem Steg 204 hineinragt. Dabei ist die Kröpfung 304 des Nutsteins 300 zur Kröpfung 112 bzw. 212 der Profilschiene 100, 200 hin gerichtet. Durch Anziehen der Befestigungsschraube 420, welche vorteilhaft bereits vorinstalliert den Nutstein 300 locker mit dem Befestigungselement 400 verbindet, wird der Nutstein 300 in die Richtung aus der Öffnung 115, 215 der Nut 101 bzw. 201 hinaus gezogen. Indem beim Anziehen der Befestigungsschraube 420 darauf geachtet wird, dass der Nutstein 300 am oberen Bereich der Profilschiene 100 bzw. 200 am Steg 106 bzw. 206 anliegt, greifen die Kröpfungen 112 und 113 bzw. 212 und 213 in die Kröpfung 304 und die Ausnehmung 303 ein und bilden dabei einen Formschluss. Insbesondere bildet dabei der Hintergreifsteg 302 zusammen mit der Nase 304 des Nutsteins 300 gegenüber dem Steg 110 mit der Kröpfung 112 einen Hintergriff, wobei die Verbindung zwischen der Kröpfung 112 und der Nase 304 die Form eines halben Schwalbenschwanzes bildet. Der Nutstein 300 ist dadurch fest und bei ausreichend angezogener Schraube 420 unverschiebbar in der Nut 101 bzw. 201 der Profilschiene 100 bzw. 200 fixiert. Der Endbereich der Schraube 420 liegt dann am Steg 110 bzw. 210 auf der gegenüberliegenden Seite der Kröpfung 112 bzw. 212 an. Die derart am mittleren Befestigungselement 400 befestigte Profilschiene 100, 200 liegt mit den Enden der Stege 106 und 104 sowie 206 und 204 am Befestigungselement 400 an.

Vorteilhaft bei einer solchen Verbindungsart der Profilschiene 100, 200 mit dem Befestigungselement 400 ist insbesondere, dass die Profilschiene 100, 200 vor dem endgültigen Festziehen der Schraube 420 in Längsrichtung beliebig entlang dem Befestigungselement 400 verschiebbar ist. Ein Herausrutschen des Nutsteins 300 aus der Nut 101, 201 wird dabei durch ein Ineinandergreifen der Kröpfungen 112, 113, 212, 213 in die Kröpfung 304 und die Ausnehmung 303 auch bei nur locker angezogener Schraube 420 verhindert. Dies erhöht die Flexibilität bei der Installation der Solarmodule 800 wesentlich. Auch kann eine Profilschiene 100 oder 200 zu einem späteren Zeitpunkt nach der Installation beliebig ersetzt, verschoben oder an weiteren Befestigungselementen 400 befestigt werden.

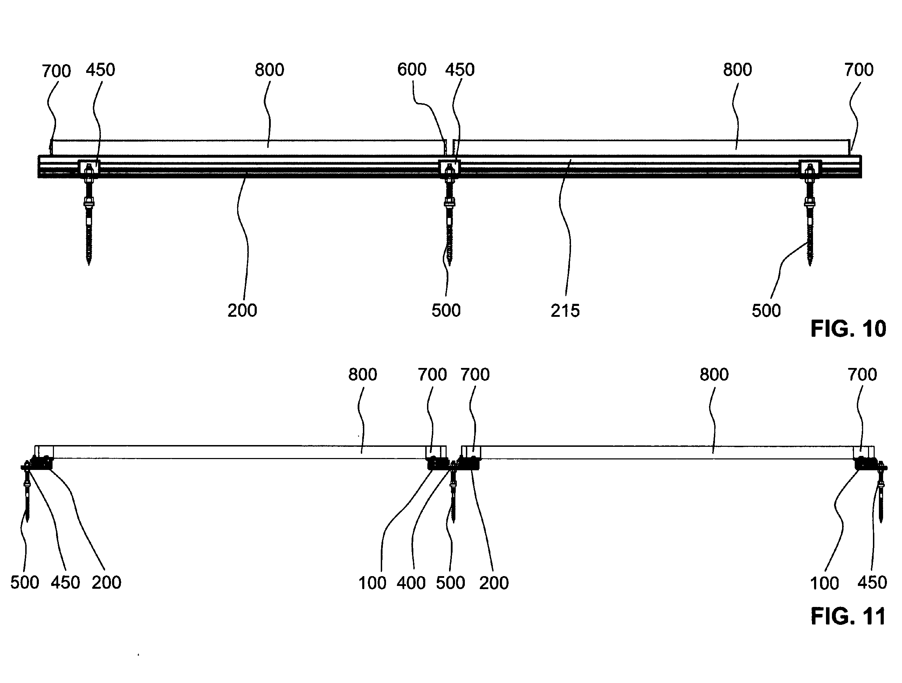

Das in Figur 3 gezeigte mittlere Befestigungselement 400 dient der Befestigung von zwei Solarmodulen 800, wobei die in Bezug zur Dachneigung untere Profilschiene 100 der Halterung eines unteren Solarmoduls 800 dient und die obere Profilschiene 200 der Halterung eines oberen Solarmoduls 800. Für die Befestigung eines am Rand angeordneten Solarmoduls 800 kann ein gegenüber dem mittleren Befestigungselement 400 leicht verändertes, seitliches Befestigungselement 450 verwendet werden. Das seitliche Befestigungselement 450 ist wie das mittlere Befestigungselement 400 ausgebildet und weist ebenso einen Hauptabschnitt 451 mit einer Durchfiihröffnung 453 und einen dazu senkrechten seitlichen Abschnitt 452 mit einer Öffnung 454 auf (Figur 5). Es hat jedoch keinen zweiten, seitlichen Abschnitt, der dem Abschnitt 403 des mittleren Befestigungselementes 400 entsprechen würde. Somit kann nur eine Profilschiene 100 oder 200 am seitlichen Befestigungselement 450 befestigt werden. Durch das Fehlen eines zweiten seitlichen Abschnittes bildet das Befestigungselement einen ästhetisch ansprechenden unteren bzw. oberen Abschluss der Vorrichtung. Die unterschiedliche Verwendung der mittleren Befestigungselemente 400 und der seitlichen Befestigungselemente 450 ist insbesondere auch in Figur 11 gezeigt.

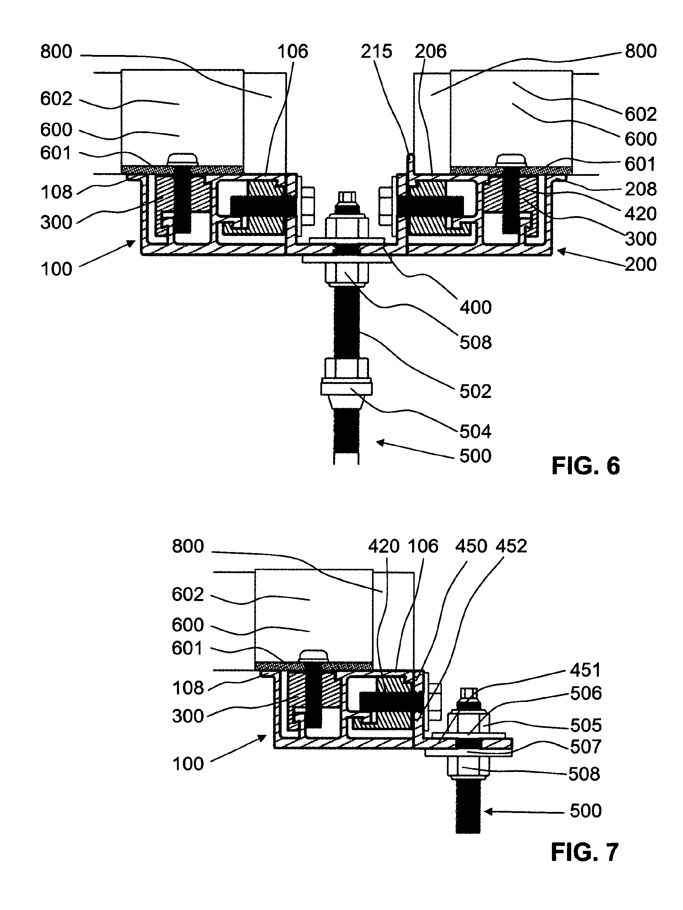

Auf die gleiche Art und Weise wie die Profilschienen 100, 200 an den Befestigungselementen 400, 450 befestigt werden, werden Niederhalteelemente 600 oder 700, welche zur Halterung der Solarmodule 800 dienen, wie in den Figuren 6 und 7 gezeigt, an den Profilschienen 100 oder 200 befestigt. Es werden dazu ebenfalls Nutsteine 300 verwendet, welche analog zu der oben beschriebenen Art und Weise in die Öffnungen 116 und 216 der Nuten 102 bzw. 202 eingesetzt werden und mittels einer Befestigungsschraube 420 mit einem Niederhalteelement 600 oder 700 verbunden werden. Der Nutstein 300 ist dabei von Vorteil jeweils bereits vor der Installation der Solarmodule 800 auf dem Dach mittels der Befestigungsschraube 420 mit dem Niederhalteelement 600 bzw. 700 verbunden und somit an diesem vorinstalliert. Nach dem Einsetzen des mit dem Niederhalteelement 600 oder 700 verbundenen Nutsteins 300 an einer beliebigen Stelle entlang der Längsausdehnung der Nut 102 bzw. 202 kann das Niederhalteelement 600, 700 vor dem Festziehen der Befestigungsschraube 420 beliebig entlang der Längsrichtung der Nut 102 bzw. 202 verschoben werden. Das Niederhalteelement 600 bzw. 700 kann so bezüglich seiner Position flexibel an die endgültige Platzierung und an die Dimensionen des Solarmoduls 800 angepasst werden. Insbesondere muss der Niederhalter 600 bzw. 700 nicht zwingend direkt benachbart zu einer Stelle montiert werden, wo die Profilschiene 100 bzw. 200 mit einem Befestigungselement 400 verbunden ist.

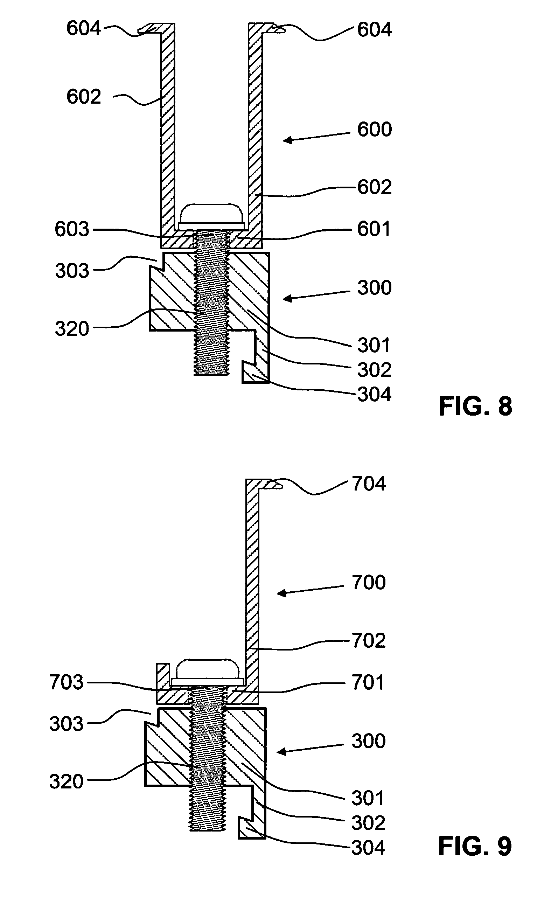

In den Figuren 8 und 9 sind die Niederhalteelemente 600 und 700 gemäss der vorliegenden Ausführungsform jeweils im Querschnitt gezeigt. Das mittlere Niederhalteelement 600 ist im Querschnitt U-förmig ausgestaltet und weist einen Verbindungsabschnitt 601 mit einer Öffnung 603 auf, durch welche eine Befestigungsschraube 420 durchführbar ist, um das Niederhalteelement 600 mit einem Nutstein 300 zu verbinden. An den beiden Enden des Verbindungsabschnittes 601 grenzen jeweils seitliche Abschnitte 602 an, welche sich in senkrechter Richtung zum Verbindungsabschnitt 601 nach oben hin erstrecken. Die Länge der seitlichen Abschnitte 602 entspricht dabei ungefähr der Höhe eines Solarmoduls 800. An den Enden der beiden seitlichen Abschnitte 602 sind jeweils senkrecht dazu Niederhalter 604 in Form von Vorsprüngen ausgebildet, welche vom jeweils anderen, gegenüberliegenden seitlichen Abschnitt 602 weggerichtet sind. Die Niederhalter 604 weisen insbesondere eine ebene, nach unten weisende Unterseite auf. In Längsrichtung, also der Richtung senkrecht zur Querschnittsfläche, ist das Niederhalteelement 600 in etwa gleich lang ausgebildet wie der Nutstein 300 in Richtung senkrecht zu dessen Querschnitt. Es könnte aber selbstverständlich auch eine andere Länge aufweisen.

Das seitliche Niederhalteelement 700 ist identisch wie das mittlere Niederhalteelement 600 ausgebildet, mit Ausnahme, dass es nur einen seitlichen Abschnitt 702 aufweist. Das seitliche Niederhalteelement 700 weist also analog zum mittleren Niederhalteelement 600 einen Verbindungsabschnitt 701 mit einer zentralen Öffnung 703 und einen daran angrenzenden, seitlichen Abschnitt 702 mit einem senkrecht von diesem abstehenden Niederhalter 704 auf. Der zweite seitliche Abschnitt fehlt beim seitlichen Niederhalteelement 700 vollständig bis auf eine kurze, senkrecht vom Verbindungsabschnitt 701 nach oben ragende Lippe.

Wie in den Figuren 6 und 10 gezeigt ist, wird das mittlere Niederhalteelement jeweils zwischen zwei Solarmodulen 800, welche in Bezug auf die Dachneigung seitlich nebeneinander auf derselben Höhe angeordnet sind, eingesetzt. Dabei liegen die Solarmodule 800 mit ihren Seitenflächen jeweils an je einem seitlichen Abschnitt des Niederhalteelementes 600 an. Der Niederhalter 604 liegt jeweils mit seiner ebenen Unterseite auf der Oberseite des Solarmoduls 800 auf und drückt dieses nach unten. Dadurch ist das Solarmodul 800 zwischen dem Niederhalter 604 und der Profilschiene 100 bzw. 200 eingeklemmt und fixiert. Während, wie in Figur 10 ersichtlich ist, zwischen zwei Solarmodulen 800 das Niederhalteelement 600 verwendet wird, wird jeweils am seitlichen Rand einer Anordnung von Solarmodulen 800 ein Niederhalteelement 700 eingesetzt, um einen ästhetisch ansprechenden Abschluss zu ermöglichen.

Die Niederhalteelemente 600 und 700 können jederzeit nach der Montage der Solarmodule 800 durch Lösen der Befestigungsschrauben 420 wieder von der restlichen Vorrichtung entfernt oder entlang der Profilschienen 100, 200 verschoben werden, um beispielsweise ein Solarmodul zu entfernen, zu ersetzen oder zu verschieben.

Insgesamt ermöglicht die erfindungsgemässe Vorrichtung zur Montage von Solarmodulen auf einem Dach eine äusserst flexible und einfache Montage. Insbesondere ist die Installation von beliebig dimensionierten Solarmodulen 800 möglich. Dadurch, dass die Nutsteine 300 an einer beliebigen Stelle in die Nuten 101 bzw. 201 einsetzbar und darin verschiebbar sind, ist es möglich, die Stockschrauben 500 in einem ersten Schritt der Montage mit einer gewissen Flexibilität bezüglich deren Anordnung auf dem Hausdach in ein Element des Daches einzuschrauben. So müssen die an unterschiedlichen Stockschrauben 500 vorinstallierten Befestigungselemente 400 bzw. 450 für die Installation einer Profilschiene 100 oder 200 zwar auf einer Linie angeordnet sein, sie können jedoch beliebige, insbesondere auch unregelmässige Abstände zueinander aufweisen, solange die Stabilität der Vorrichtung dadurch nicht gefährdet ist. Die Anordnung der Stockschrauben 500 kann sich also insbesondere an die speziellen Gegebenheiten der Konstruktion eines Hausdaches anpassen. Die Länge der Profilschienen 100, 200 kann bei der Installation der Solarmodule vor Ort einfach wie erwünscht angepasst werden, beispielsweise durch Absägen. Nach dem Befestigen der Profilschienen 100 und 200 auf dem Dach können die Solarmodule 800 installiert werden, welche auch zu einem späteren Zeitpunkt nach der Installation noch beliebig entlang der Profilschienen 100 bzw. 200 verschoben und neu fixiert werden können.

Die Erfindung ist selbstverständlich nicht auf das vorstehende Ausführungsbeispiel beschränkt, und eine Vielzahl von Abwandlungen ist möglich. So können beispielsweise die Nuten 101, 102 bzw. die Nuten 201, 202 jeweils unterschiedlich zueinander bezüglich Form und Dimensionen ausgebildet sein. Es können dann folglich auch unterschiedlich ausgebildete Nutsteine 300 verwendet werden, welche aber jeweils komplementär zu einer entsprechenden Nut ausgebildet wären. Es ist aber auch die Verwendung von andersartig ausgebildeten Niederhalteelementen denkbar. Insbesondere ist es auch denkbar, keine Niederhalteelemente zu verwenden und beispielsweise den Rahmen eines Solarmoduls direkt mit dem Nutstein zu verschrauben. Im oben beschriebenen Ausführungsbeispiel wurden ein Befestigungselement und eine Stockschraube zur Befestigung der Profilschiene am Hausdach benutzt. Natürlich sind beliebige andere Befestigungsmöglichkeiten der Vorrichtung auf einem Hausdach gemäss dem bekannten Stand der Technik, wie zum Beispiel bügelförmige Halterungen, denkbar. Eine Vielzahl weiterer Abwandlungen ist möglich.

### BEZUGSZEICHENLISTE

| | | | |
|---|---|---|---|
| 100 | Profilschiene | 404 | Durchführöffnung |
| 101 | Erste Nut | 405,406 | Öffnung |
| 102 | Zweite Nut | 420 | Schraube |
| 103 | Hauptabschnitt | 450 | Seitliches |
| 104, | 105, 106, 107 Steg | | Befestigungselement |
| 108 | Auflagelippe | 451 | Hauptabschnitt |
| 109, 110 | Steg | 452 | Seitlicher Abschnitt |
| 111, 112, 113, 114 | Kröpfung | 453 | Durchführöffnung |
| 115 | Erste Öffnung | 454 | Öffnung |
| 116 | Zweite Öffnung | 500 | Stockschraube |
| 200 | Profilschiene mit Anschlag | 501 | Befestigungsgewinde |
| 201 | Erste Nut | 502 | Montagegewinde |
| 202 | Zweite Nut | 503 | Übergangsbereich |
| 203 | Hauptabschnitt | 504 | Dichtelement |
| 204, 205, 206, 207 | Steg | 505 | Obere Befestigungsmutter |
| 208 | Auflagelippe | 506 | Obere Unterlegscheibe |
| 209,210 | Steg | 507 | Untere Unterlegscheibe |
| 211,212,213,214 | Kröpfung | 508 | Untere Befestigungsmutter |
| 215 | Erste Öffnung | 600 | Mittleres Niederhalteelement |
| 216 | Zweite Öffnung | 601 | Verbindungsabschnitt |
| 217 | Anschlagelement | 602 | Seitlicher Abschnitt |
| 300 | Nutstein | 603 | Öffnung |
| 301 | Hauptabschnitt | 604 | Niederhalter |
| 302 | Hintergreifsteg | 700 | Seitliches Niederhalteelement |
| 303 | Ausnehmung | 701 | Verbindungsabschnitt |
| 304 | Nase | 702 | Seitlicher Abschnitt |
| 400 | Mittleres | 703 | Öffnung |
| | Befestigungselement | 704 | Niederhalter |
| 401 | Hauptabschnitt | 800 | Solarmodul |
| 402, 403 | Seitlicher Abschnitt | | |

## Patentansprüche

1. Vorrichtung für die Montage von Solarmodulen (800) auf einem Dach, insbesondere eine Vorrichtung für eine Auf-Dach-Montage von Solarmodulen (800), aufweisend
eine Profilschiene (100, 200) mit einer ersten Nut (101, 201), die eine erste Öffnung (115, 215) aufweist, und einer zweiten Nut (102, 202), die eine zweite Öffnung (116, 216) aufweist,
ein erster Nutstein (300), welcher in die erste Öffnung (115, 215) der ersten Nut (101, 201) einsetzbar ist und welcher zur Verbindung der Profilschiene (100, 200) mit einem am Dach angebrachten Befestigungselement (400, 450) dient, und
ein zweiter Nutstein (300), welcher in die zweite Öffnung (116, 216) der zweiten Nut (102, 202) einsetzbar ist und welcher zur Verbindung der Profilschiene (100, 200) mit einem Solarmodul (800) dient,
**dadurch gekennzeichnet, dass**
die erste Nut (101, 201) und die zweite Nut (102, 202) annähernd auf gleicher Höhe nebeneinander angeordnet sind.

2. Vorrichtung gemäss Anspruch 1, wobei die erste Öffnung (115, 215) und die zweite Öffnung (116, 216) in zwei um 90° versetzte Richtungen weisen.

3. Vorrichtung gemäss einem der Ansprüche 1 oder 2, wobei die Profilschiene (100, 200) einen Querschnitt aufweist, der als Ganzes im Wesentlichen rechteckig ist.

4. Vorrichtung gemäss einem der vorhergehenden Ansprüche, wobei die Profilschiene (100, 200) einen Steg (105, 205) aufweist, welcher die erste Nut (101, 201) und die zweite Nut (102, 202) voneinander trennt.

5. Vorrichtung gemäss Anspruch 4, wobei der Steg (105, 205) im Querschnitt einerseits senkrecht zur Richtung, in welche die erste Öffnung (115, 215) weist, verläuft und andererseits parallel zur Richtung, in welche die zweite Öffnung (116, 216) weist, verläuft.

6. Vorrichtung gemäss einem der vorhergehenden Ansprüche, wobei der erste Nutstein (300) und der zweite Nutstein (300) identisch ausgebildet sind, und/oder die erste Nut (101, 201) und die zweite Nut (102, 202) identisch ausgebildet sind.

7. Vorrichtung gemäss einem der vorhergehenden Ansprüche, wobei der Querschnitt der Profilschiene (100, 200) im Wesentlichen durch vier, miteinander verbundene Abschnitte (103, 105, 107, 106; 203, 205, 207, 206) gegeben ist, wobei jeweils zwei aneinander angrenzende Abschnitte (103, 105, 107, 106; 203, 205, 207, 206) senkrecht aufeinander stehen.

8. Vorrichtung gemäss einem der vorhergehenden Ansprüche, wobei die erste Nut (101, 201) und die zweite Nut (102, 202) im Querschnitt jeweils drei zueinander parallel verlaufende Stege (105, 107, 109; 104, 106, 110; 205, 207, 209; 204, 206, 210) aufweisen.

9. Vorrichtung gemäss Anspruch 8, wobei der mittlere der drei parallel zueinander verlaufenden Stege (105, 107, 109; 104, 106, 110; 205, 207, 209; 204, 206, 210) im Vergleich zu den beiden äusseren Stegen (105, 107; 104, 106; 205, 207; 204, 206) kürzer ausgebildet ist.

10. Vorrichtung gemäss Anspruch 9, wobei die drei parallel zueinander verlaufenden Stege (105, 107, 109; 104, 106, 110; 205, 207, 209; 204, 206, 210) durch ein geradlinig ausgebildetes Element der Profilschiene miteinander verbunden sind.

11. Vorrichtung gemäss einem der vorhergehenden Ansprüche, wobei innerhalb der ersten Nut (101, 201) und innerhalb der zweiten Nut (102, 202) jeweils zumindest zwei Kröpfungen (111, 112, 113, 114; 211, 212, 213, 214) vorhanden sind, welche bei der Verbindung der Profilschiene (100, 200) mit dem Solarmodul (800) bzw. mit dem Befestigungselement (400, 450) vom jeweiligen Nutstein (300) hintergriffen werden, um den Nutstein (300) fest in der Nut (101, 102, 201 202) zu halten.

12. Vorrichtung gemäss Anspruch 11, wobei die Kröpfungen (111, 112, 113, 114; 211, 212, 213, 214) innerhalb einer Nut (101, 102, 201, 202) jeweils in dieselbe Richtung gerichtet sind.

13. Vorrichtung gemäss einem der vorhergehenden Ansprüche, wobei der erste Nutstein (300) und der zweite Nutstein (300) jeweils einen L-förmigen Querschnitt aufweisen.

14. Vorrichtung gemäss einem der vorhergehenden Ansprüche, wobei der erste Nutstein (300) und der zweite Nutstein (300) im Querschnitt jeweils eine Form aufweisen, welche eine Drehbewegung des Nutsteins (300) um eine senkrecht zur Querschnittsfläche stehende Achse innerhalb der ersten Nut (101, 201) bzw. der zweiten Nut (102, 202) aufgrund der Breite der Nut (101, 102, 201, 202) begrenzt.

15. Vorrichtung gemäss einem der vorhergehenden Ansprüche, wobei sich die erste Nut (101, 201) und die zweite Nut (102, 202) jeweils annähernd über die gesamte Länge der Profilschiene (100, 200) erstrecken, und der erste Nutstein (300) und der zweite Nutstein (300) entlang dieser Länge jeweils an einer beliebigen Stelle der Profilschiene (100, 200) in die entsprechende erste oder zweite Nut (101, 102, 201, 202) einsetzbar sind.
